# EUROPEAN PATENT SPECIFICATION

(11) **EP 1 474 943 B1**
(45) Date of publication and mention of the grant of the patent: **27.07.2005**
(21) Application number: 02702356.3
(22) Date of filing: 15.02.2002
(51) Int. Cl.: H04Q 7/38

(54) **METHOD AND NODE FOR ESTABLISHING PRIORITY CONNECTIONS IN TELECOMMUNICATION NETWORKS**
VERFAHREN UND KNOTEN ZUR ERRICHTUNG VON VORZUGSVERBINDUNGEN IN TELEKOMMUNIKATIONSNETZEN
NOEUD PERMETTANT D'ETABLIR DES CONNEXIONS PRIORITAIRES DANS DES RESEAUX DE TELECOMMUNICATION ET PROCEDE AFFERENT

(43) Date of publication of application: 10.11.2004
(73) Proprietor: Telefonaktiebolaget LM Ericsson (publ), 164 83 Stockholm (SE)
(72) Inventor: HOLLIS, Mark, Park Orchards 3114 (AU); HODGES, Philip, VIC 3143 Armadale (AU); RYTINA, Ian, Carlton, VIC 3053 (AU)
(74) Representative: Tonscheidt, Andreas
(86) International application number: PCT/EP2002/001613
(87) International publication number: WO 2003/077580

(56) References cited:
- WO-A-96/31015
- US-A- 5 488 609
- RAMASWAMI R ET AL: "DISTRIBUTED NETWORK CONTROL FOR OPTICAL NETWORKS" IEEE / ACM TRANSACTIONS ON NETWORKING, IEEE INC. NEW YORK, US, vol. 5, no. 6, 1 December 1997 (1997-12-01), pages 936-942, XP000734419 ISSN: 1063-6692
- ZHANG L: "WHY TCP TIMERS DON'T WORK WELL" COMPUTER COMMUNICATIONS REVIEW, ASSOCIATION FOR COMPUTING MACHINERY. NEW YORK, US, vol. 16, no. 3, 5 August 1986 (1986-08-05), pages 397-405, XP000743153 ISSN: 0146-4833

## Description

### Technical field of the invention

The present invention relates to a method according to the preamble of claim 1. Devices and software programs embodying the invention are also described.

### Background of the invention

Both for mobile telecommunication networks, e.g. UMTS (Universal Mobile Telecommunication System) or GSM (Global System for Mobile communication) networks, and for fixed networks, the Bearer Independent Call Control (BICC) protocol is used to control the set-up and establishment of connections, e.g. telephone calls, independent of the underlying bearer technology for handling the payload of the connections.

BICC Capability Set 3 is introducing a priority service as specified in ITU-T Recommendation 1.255.4, *Integrated Services Digital Network (ISDN) General Structure and Service Capabilities, Priority Service.* When congestion is encountered, priority connections shall be given preferential treatment within the network for the priority service. Such preferential treatment can especially include the functions of an extended waiting time before time-out of network units handling the connection and/or waiting for a line on the route to become free.

The priority of a connection can be indicated by a corresponding field in the initial message for the connection set-up, e.g. an initial address message (IAM).

For example, some or all bits of an octet in the IAM can be designated for this purpose.

Under normal conditions when the network is not congested and the nodes have the necessary resources to complete all connections, the connection establishment is processed without special treatments. At least one node processing, i.e. controlling or handling the connection attributes a timer to it, which ensures that resources reserved for said connection are released should the set-up fail. A node controlling the connection can be for example an MSC (Mobile Services Switching Center) or a transit-switching node (TSN) connecting a mobile network to a fixed network. The bearer can either be handled in the same node or in a separate bearer node, e.g. in a media gateway (MGW), which is at least partly controlled by the controlling node.

In case of network congestion when the nodes do not have sufficient resources to complete all incoming connection establishment requests, the nodes can give preferential treatments based on the priority level. The preferential treatment can especially include access to reserved network resources, e.g. only the highest priority connections are given access to the resources reserved for highest priority connections while the second priority connections are given only access to resources reserved for the second priority connections, excluding the resources reserved for the highest priority connections. Further priority levels are possible, connections for each level having only access to resources reserved for the same or a lower level.

Allocation of reserved network resources to specific priority levels is implementation specific. If a node cannot complete a high priority connection establishment request even after application of the preferential treatment, it clears the connection.

Nodes with interaction to the served user, especially the originating control or bearer node in a connection, can receive the connection priority information from the user. The originating node then forwards the information to further nodes in the connection. For example in BICC, when an outgoing protocol entity instance of a bearer node receives the connection priority information along with a request for a new connection from a nodal function, the connection priority parameter is included in the ERQ message (Establish Request). If a connection priority parameter is received in an ERQ message by an incoming protocol entity, the incoming protocol entity instance passes the connection priority information to the nodal function along with the request for a new connection.

The priority information can be used in the nodes in different ways. For example, when the nodal functions select a route at the originating endpoint of the bearer, priority information can be used to select a route that has sufficient resources to the succeeding bearer node or directly to the terminating user. For bearer nodes without interaction to the originating user of a connection, the nodal functions can also check the availability of resources in the incoming bearer path. The connection priority information can further be used to allocate internal resources of the bearer node to establish an internal path for the connection from the incoming bearer path through the bearer node to the outgoing bearer path, either to a subsequent bearer node or to the terminating user of the connection.

The above specifications for a telecommunication network allow to handle connections with the corresponding priority in all nodes. However, this does often not ensure a successful establishment of priority connections. Especially, it is possible that different nodes use different mechanisms for ensuring connection priority, especially if nodes in different parts of a network are updated at different times, e.g. by different operators. In this case it is possible that a connection is queued in a first node, i.e. waiting for free resources to become available in said or another node, while a timer for said connection expires in a still further node. Even if each node handles the connection with priority, it is therefore still possible that a connection is not successfully established. It is also possible that the user requesting the connection terminates the request if the establishment takes an excessive time due to queuing.

The document RAMASWAMI R ET AL: "DISTRIBUTED NETWORK CONTROL FOR OPTICAL NETWORKS" IEEE / ACM TRANSACTIONS ON NETWORKING discloses a network wherein reserve-timers are set to define the time until reserved resources are released.

### Summary and description of the invention

It is an object of the present invention to obviate the above disadvantages and provide a method, a communication system and a node, which allow a safe establishment of priority connections.

According to the invention, the method described in claim 1 is performed. Furthermore, the invention is embodied in a communication network, a node and a software program as described in claims 9 to 11. Advantageous embodiments are described in the further claims.

An advantageous method for establishing a priority connection in a telecommunication network with a plurality of nodes for processing the connection is described. The processing can be a handling or a controlling of the connection. The nodes can accordingly be control nodes or bearer nodes or nodes handling both control signaling and bearer establishment. The nodes comprise resources, which can be attributed for handling or controlling the connection. For each connection request, resources are attributed in the node. The resources can for example comprise circuitry to process the connection, allocated memory or processing intervals or software identifiers like addresses.

At least one timer in the node supervises the connection establishment. It is possible that more than one timer is attributed to a connection, e.g. for supervising different aspects of the establishment of said connection relating to the control signaling and the bearer establishment. An expiry of any of said timers releases the resources attributed to the connection.

For every timer, an expiry value is specified to avoid the blocking of resources if the request for connection establishment fails. When a first of said nodes receives a request to set up a priority connection, the first node selects a first of said timers according to an expiry value specified for priority connections, generally being different from the expiry value of the corresponding timer for regular connections. In a preferable embodiment of the method, the period for timer expiry is increased compared to a regular connection, i.e. a later timer expiry is specified for a priority connection. It is possible, that different timers attributed to a priority connection have different expiry values.

The first node sends an indication of the connection priority and a queuing indication to a further node controlling the connection. The queuing indication is a notification that at least one special expiry value was selected for this connection. The queuing indication can be for example an indication, that a queuing of priority call attempts can be accommodated by the preceding nodes, a flag that at least one timer was extended, or an information specifying which timers were selected, optionally including also an indication of the amended expiry value. The further node checks whether an indication of a connection priority and a queuing indication is received. The further node selects, according to the result of the check, at least one further of said timers according to an expiry value specified for priority connections, i.e. the expiry value for priority connections is selected if a queuing indication and a priority indication is received. For both the first and the further node it is possible, that the selection of the timers and corresponding expiry values depends on the value of the connection priority indication.

The proposed method enables to extend network timers without the danger of an unintended release of the connection. The method is easy to implement and can flexibly be adapted to different queuing requirements. The method is especially suitable for use within a BICC network.

In a preferable embodiment, the request is the initial message to set up a connection and said initial message comprises a data field indicating a priority class for the connection. The initial message is for example an IAM. The data field or specified values or selected bits of the data field can be used to indicate different levels of connection priority, e.g. an emergency call.

Said plurality of nodes can comprise control nodes controlling the connection, e.g. an MSC server, and bearer nodes adapted to establish a bearer for the connection, e.g. an MGW. It is, however, also possible that a node both controls the connection and establishes bearers like a customary MSC.

It is correspondingly possible that the first and the further node both control the connection, that both nodes handle the bearer for the connection or that one node controls the connection while the other node handles the bearer. Therefore different queuing indications in the control level, in the bearer level and between both levels for the connection can be distinguished. In an advantageous embodiment, the queuing indication is contained in a group comprising a first queuing indication for messages between nodes controlling the connection, a second queuing indication for messages between nodes handling the connection and a third queuing indication for a message between a node handling the connection and a node controlling the connection. It is either possible to amend existing messages in the used protocols to comprise these indications or to define new messages for this purpose.

In order to avoid a premature release of the connection by the user, the further node replies to the queuing indication with a connection progress notification. The connection progress notification can be forwarded by the nodes processing the connection in the direction of the party requesting the priority connection. It is possible that the sending of this message is delayed by a specified period of time. Especially, the connection progress notification can initiate the sending of a tone or an announcement to the party requesting the priority connection.

Often different nodes will handle or control a connection, wherein some of the nodes are adapted to the queuing of connections while others of the nodes are not. In this case, the further node sends a first request to set up the connection and the indication of the connection priority and the queuing indication to a third node processing the connection, preferably all in a single message. The third node then rejects the queuing indication as unsupported to the further node. The further node waits for a confirmation of a bearer establishment for said connection and sends a further request to set up the connection and a further indication of the connection priority to the third node, if a release message is received from the third node for said connection. In this way, an establishment of priority connections can also be ensured if a node in the connection is not adapted to the queuing of connections.

In the proposed method, it is possible to specify an infinite expiry time for a priority connection. In this case, the selection of the first or the further timer can be a decision that no timer for releasing the resources is attributed to a priority connection. It is of course also possible to use extended timers for supervising one aspect of priority connections while supervising a different aspect only for regular connections, i.e. to attribute a reduced number of, optionally extended, timers to priority connections. If an infinite expiry time is specified, preferably a mechanism to detect and release unsuccessful connection establishment requests is implemented in the communication system to avoid the blocking of resources.

A preferable node for processing connections in a telecommunication network with a plurality of nodes comprises resources, which can be attributed for processing the connection and at least one timer for supervising the connection establishment. An expiry of the timer initiates a release of the resources attributed to the connection. The node comprises also interfaces to receive a request to set up a priority connection and to send messages to further nodes, i.e. transmission and reception units for sending and receiving messages. The node comprises a processing system which is adapted to select the at least one timer according to an expiry value specified for priority connections. The node is also adapted to send an indication of the connection priority and a queuing indication being indicative of the timer selection to a further node processing the connection.

The proposed method can also be embodied in a program unit adapted for execution in the processing system of a node for processing connections in a telecommunication network with a plurality of nodes. The program unit comprises code for attributing resources to the connection for processing the connection and at least one timer for supervising the connection establishment. An expiry of the timer initiates a release of the resources attributed to the connection. The program unit is adapted to select the at least one timer according to an expiry value specified for priority connections. The program unit is also adapted to send an indication of the connection priority and a queuing indication for the timer selection to a further node processing the connection. The steps performed by the processing unit can be executed by function calls to an operating system or commands to hardware units in the node.

The program unit as well as the node can perform any steps relating to the respective node in the method described above. A program unit according to the invention is for example stored on a data carrier or loadable into the operating system of a node, e.g. as a sequence of signals.

The foregoing and other objects, features and advantages of the present invention will become more apparent in the following detailed description of preferred embodiments as illustrated in the accompanying drawings.

### Brief description of the drawings

- Fig. 1: shows the consequence of queuing priority connection state of the artrequests in the
- Fig. 2: shows a first embodiment for extending network timers for priority connections
- Fig. 3: shows a successful queuing of a priority connection at the control layer with extended network timers and subscriber notification according to the invention
- Fig. 4: shows a successful queuing of priority connections at the bearer layer with extended network timers and subscriber notification according to the invention
- Fig. 5: shows a successful queuing of priority connection when inter-working with a subsequent node or network that does not support queuing

### Detailed description of preferred embodiments of the invention

According to ITU_T specifications different timers are used for the supervision of a connection establishment. All timers ensure, that resources reserved for a connection during the set-up and establishment are released in case of a failed connection attempt. Timer t1, also denoted Timer_ERQ, ensures that a reply to a bearer establishment request is received. A typical time-out value is 5-30 seconds. The timer t1 is started when an ERQ message is sent and stopped at the receipt of an ECF (Establish Confirm) message. If timer t1 expires, all resources and the connection are released and a release message (REL) is sent. Timer t1 is the bearer establishment supervision timer for the Q.2630.1 bearer control protocol as defined in ITU-T Recommendation Q. 2630.1 (12/99), *AAL Type 2 Signaling Protocol (Capability Set 1)*. Other bearer control protocols have similar supervision timers that can initiate premature connection release. Throughout the text these timers are generically referred to as "bearer establishment supervision timers".

A timer denoted T7 ensures that the network has enough routing information to route the connection to the called party. A typical time-out value is 20-30 seconds. Timer T7 is started in the control level when the latest address message is sent and stopped when the condition for normal release of address and routing information is met, e.g. the receipt of a message ACM (Address Complete Message) or CON (Connect). At expiry, a release procedure for the resources attributed to the connection is initiated.

In the connection control level, a timer denoted T8 ensures the supervision of the bearer path establishment. A typical time-out value is 10-15 seconds. Timer T8 is started when the CSF (Call Service Function) at a Serving Node (SN) receives an IAM indicating that a continuity message (COT) is to be expected and stopped at receipt of the COT. At expiry, a release procedure for the reserved resources is initiated.

In the following, AAL2 (ATM Adaptation Layer Type 2) bearer technology utilizing Q.2630.2 (ITU-T Recommendation Q. 2630.2 (12/2000), *AAL Type 2 Signaling Protocol (Capability Set 2)*) as bearer control protocol is used as an example for a connection bearer. However, it should be noted that any other suitable bearer protocol, e.g. the Internet Protocol IP, can be used and also a different bearer control protocol compared to the examples.

The upper parts of all figures indicate nodes for processing the connection while the lower part of the figures shows examples of messaging sequences between the nodes. Corresponding reference signs in different figures relate to corresponding features. All figures in this specification show gateway serving nodes 1, 2 (GSN) comprising both connection control entities designated CSF and bearer handling units denoted BCF (Bearer Control Function). However, it is also possible that control and bearer handling entities are implemented in different nodes.

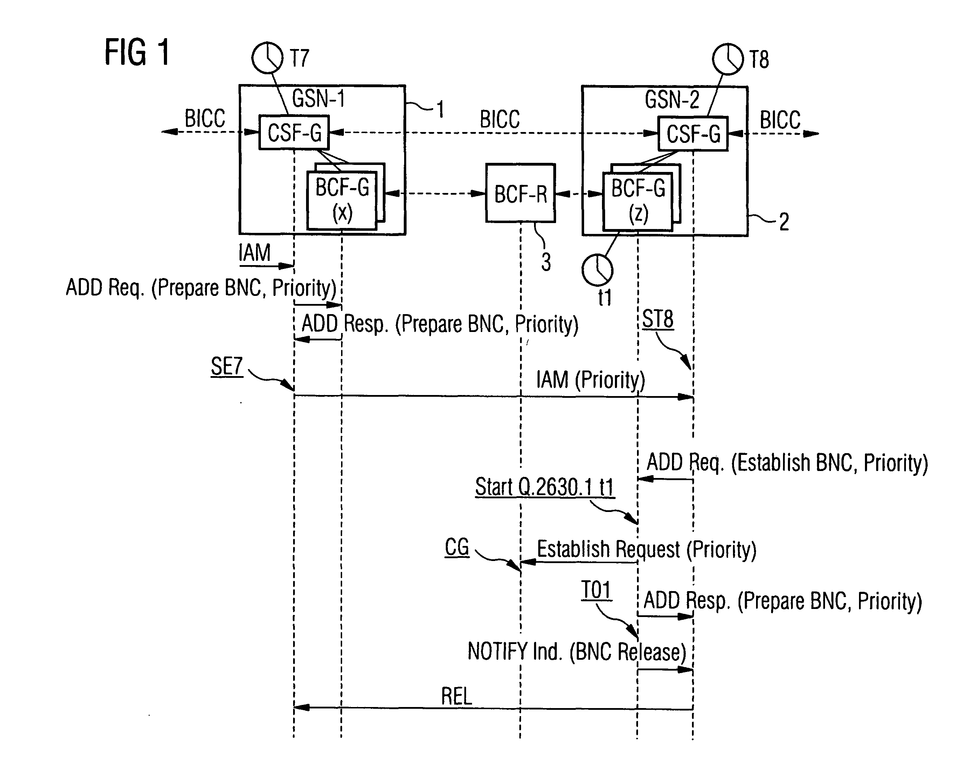

In a BICC network, several network timers need to be extended in order to allow a priority handling of connections by queuing. Figure 1 shows the consequence of not extending the network timers while queuing a priority connection establishment request. In figure 1, a connection is set up between two control nodes 1, 2 starting with an initial address message (IAM) comprising a priority indication. It is possible that the first node 1 receives an IAM from a preceding node in the connection as indicated on the left side of figure 1.

Corresponding timers T7 and T8 are started in the control level at times ST7, ST8, respectively. Both nodes 1,2 send also ADD requests to the bearer layer to initiate the bearer establishment. In the bearer level, establishment requests indicating also a priority connection are used to initiate the bearer establishment. A congestion CG is encountered at an intermediate AAL2 bearer switching node 3 with a Bearer Control Function (BCF) designated BCF-R. If the connection establishment request is queued waiting for resources to become free in BCF-R, the timer t1 in BCF-G (z) of node 2 will expire at time TO1 and the connection will be cleared by a corresponding notification message for BNC (Backbone Network Connection) release to the control level in node 2 and a subsequent release message (REL) to all preceding nodes controlling the connection. This is obviously an undesirable result for a connection that has high priority. If either timer BICC T7 or BICC T8 expired instead of timer t1 because they may be set to shorter timeout values, the result would be the same, i.e. the connection is released.

Several approaches can be taken to avoid that network timeouts occur. Either the BICC T7, T8 and bearer establishment supervision timers are not started for priority connections. Alternatively, the expiry values or BICC T7, T8 and bearer establishment supervision timers are extended or the timers are replaced by timers having longer time periods for priority connections. The proposed method can use either alternative or both if several timers are selected. When timers are inhibited, the connection establishment is not being time supervised and hanging resources must be avoided by an appropriate procedure. Therefore, extended timers are generally preferable.

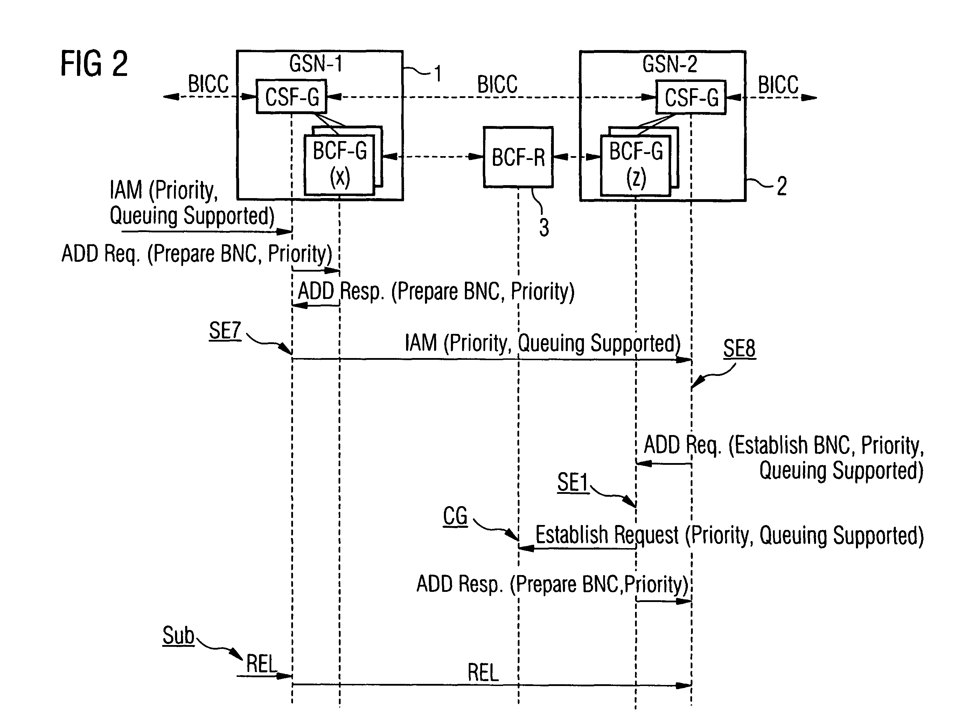

If queuing is supported in the originating node, then the timers are extended or inhibited and a queuing indication is set. In all further nodes that support queuing, the corresponding timers should also be extended or inhibited. This is shown in figure 2. Here, in the first node 1, an extended timer is started at time SE7 instead of timer T7. The priority indication in the IAM is used to indicate that the connection is to be treated with priority. The connection can be given priority in a number of ways that do not involve queuing. One is the reservation of special resources that can only be used by high priority connections. Another way of providing a priority service is connection preemption, i.e. clearing of lower priority connections. Neither of these techniques requires the extension of timers. Even if some nodes in a network do not implement queuing, a connection can be handled with priority using these other techniques while the queuing indication is needed to determine if a priority connection can be queued.

For this reason, there needs to be also an indication that timers have been extended or inhibited. This indication tells subsequent nodes involved in the connection establishment that queuing of priority connections can be accommodated.

When node 2 in figure 2 receives both the priority indication and the queuing indication in the IAM, it starts an extended timer at time SE8 before sending the ADD request to the BCF for establishing the bearer. The ADD request is used to add a termination, i.e. a further source or sink of payload, to a context, i.e. to the group of all terminations associated with a connection. The ADD request may also be used to modify default properties or capabilities or initiate new properties on the termination being added. Details are described in specification ITU-T Recommendation H.248 (06/00), *Gateway control protocol,* Section 7.2.1. The ADD Response is used to indicate successful or unsuccessful completion of the addition of a termination to a context.

The changes required for the extension or inhibition of network timers and the queuing indication need to be introduced into all bearer control protocols that are to support the queuing of bearer establishment requests and especially into the BICC protocol. Either new or a modified messages in the bearer control protocols can indicate that a connection request has been queued. Also the protocol used between the bearer level and the connection level must be updated with a new event to notify the connection level that queuing of the bearer establishment request has occurred.

With these enhancements, a BICC network is able to tolerate queuing of priority connection attempts without premature release. However, subscriber behavior must also be taken into account. If the calling subscriber does not receive any progress information within a reasonable time during the connection establishment, i.e. if there is an excessive post-dialing delay, the calling subscriber might get impatient and hang up. Figure 2 exemplifies this case by message Sub originating from the subscriber and triggering a release of the connection by a sequence of REL messages to all nodes controlling the connection.

The calling subscriber is expecting to receive a connection-progress notification. This can be for example a tone, an announcement or a message. When a node decides to queue a priority connection, a mechanism is required to trigger the sending of this connection progress information. In BICC networks, connection progress information can be sent using out-of-band signaling between the controlling nodes. In order to know when to send this information, the control layer needs an information whether the establishment attempt is being queued.

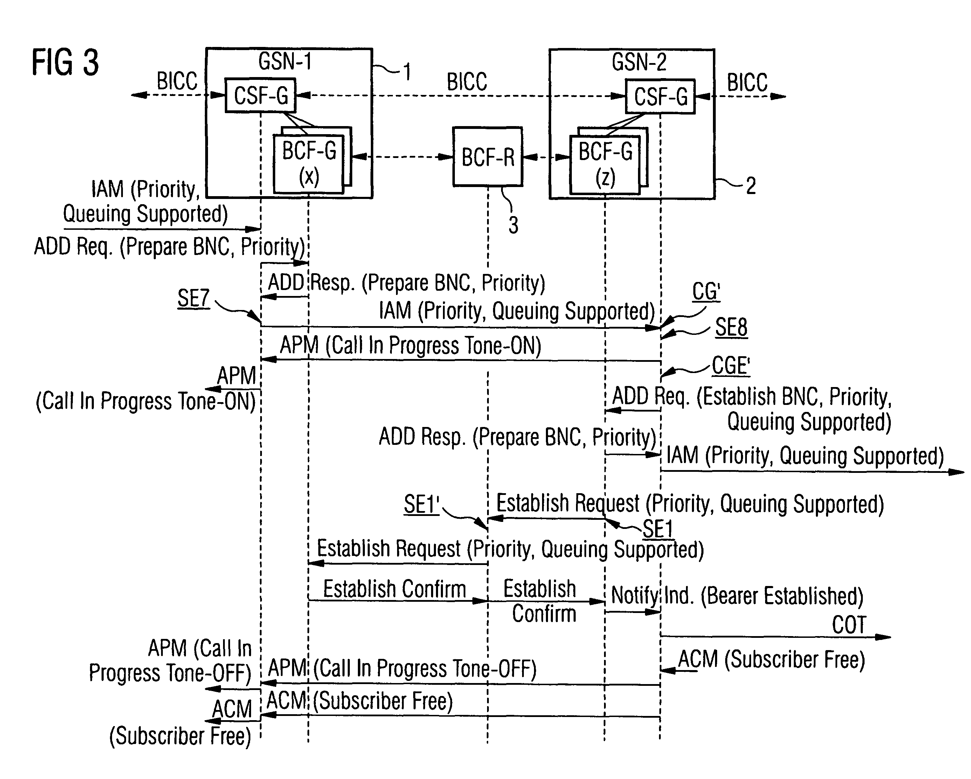

If the control layer queues the establishment request as in figure 3, then it generates a connection in progress notification or a queuing initiated APM (Application Transport Mechanism) for initiating, e.g., a call-in-progress tone to the user requesting the connection when node 2 queues the connection establishment request. This can be the case if a resource congestion CG' is encountered already in the control layer. If the resource congestion is ended at time CGE', the bearer establishment, using extended timers t1 started at times SE1, SE1', is initiated by an ADD message and the IAM with queuing and priority parameters is forwarded to the subsequent control node in the connection. After receiving the notification of the established bearers, a COT message is sent to the subsequent control node to indicate the successful bearer establishment for the bearers up to control node 2. After receiving the Address Complete Message (ACM) from the subsequent control node in the connection, node 2 sends a message APM to the preceding control node to switch the call-in-progress tone off, followed by the customary ACM to preceding node 1 as well as any further preceding control nodes.

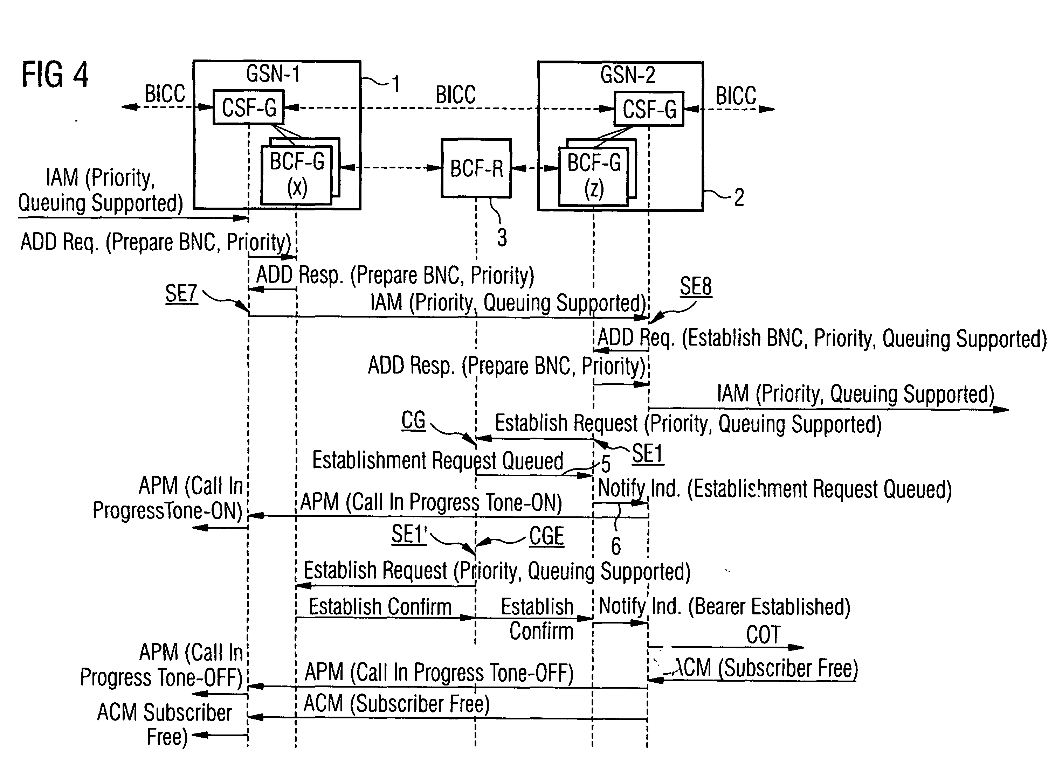

It is also possible that the bearer layer queues the establishment request as shown in figure 4, e.g. if a resource congestion CG is encountered at node 3. Then a second queuing indication 5 is required to be passed from the place of congestion CG through the bearer network and then a third queuing indication 6 from the bearer level to the control level when the connection establishment request is queued. This indication from the bearer level, that queuing is performed, needs to be mapped by the connection layer to the connection in progress notification or queuing initiated APM. The further messages IAM, ADD, ERQ, APM and ACM correspond to those as described with respect to figure 3.

Instead of mapping the indication 6 that queuing has occurred to a tone in node 2, a corresponding indication can be passed backwards toward the calling party. This indication can then be either passed to the terminal of the user or mapped to a tone or announcement by any of the preceding nodes that have the capability to do so. Also, a notification does not need to be sent immediately when the connection is first queued, but instead it can be delayed by a defined time, e.g. X seconds after the queuing is performed. Of course, the latter alternatives are possible for any congestion, e.g. for a congestion encountered on the control level as described with respect to figure 3.

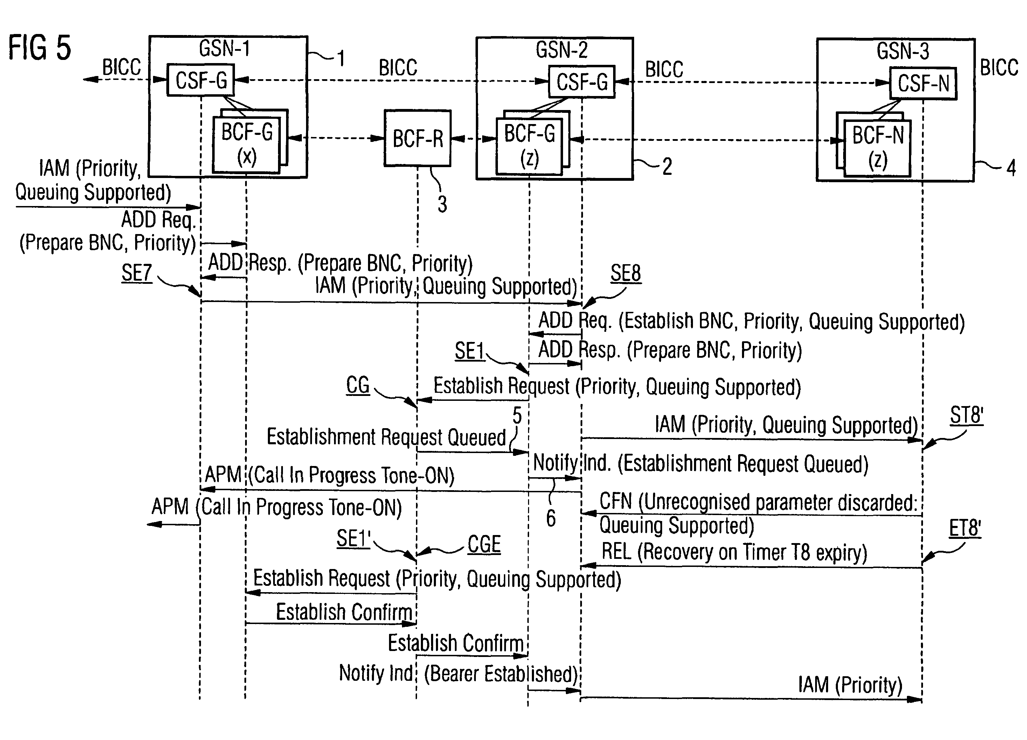

Figure 5 shows the situation in which nodes adapted to the proposed method are inter-working with control nodes according to the state of the art. Queuing is not supported in a third node 4 and the third node 4 does not recognize the queuing indicator. Correspondingly, the third node 4 rejects the queuing indication as being unsupported with message CFN (confusion) and starts an ordinary timer T8 at time ST8'. The further node 2 stores in a memory that the queuing indication is unsupported in the subsequent third node 4. The call establishment is queued in the further node 2 until the bearer has been established up to the bearer control nodal function (BCF-N) in the further node 2 or under it's control as described above. The call establishment is then continued toward the third node 4 with an initial address message comprising the priority indication but no queuing indication. The IAM is sent if the timer T8 expires prematurely in the third node 4 and an according release message is received in node 2. If no release message REL is received by further node 2, a further IAM is not sent.

The above embodiments admirably achieve the objects of the invention. However, it will be appreciated that departures can be made by those skilled in the art without departing from the scope of the invention which is limited only by the claims.

## Claims

1. Method for establishing a priority connection in a telecommunication network with a plurality of nodes (1 - 4) for processing the connection, wherein the nodes (1 - 4) comprise resources which can be attributed for processing the connection and a timer for supervising the connection establishment, an expiry of the timer releasing the resources attributed to the connection, wherein a first of said nodes (1 - 4) receives a request to set up a priority connection, **characterized in that**
the first node (1) selects a first of said timers according to an expiry value specified for priority connections,
the first node (1) sends an indication of the connection priority and a queuing indication for the timer selection to a further node (2) processing the connection,
and the further node (2) checks whether an indication of a connection priority and a queuing indication is received and selects, according to the result of the check, a further of said timers according to an expiry value specified for priority connections.

2. Method according to claim 1, wherein the request is the initial message to set up a connection and said initial message comprises a data field indicating a priority class for the connection.

3. Method according to claim 1 or 2, wherein said plurality of nodes (1 - 4) comprises control nodes controlling the connection and bearer nodes (3) adapted to establish a bearer for the connection.

4. Method according to claim 3, wherein the queuing indication is contained in a group comprising a first queuing indication for messages between nodes controlling the connection, a second queuing indication (5) for messages between nodes handling the connection and a third queuing indication (6) for a message between a node handling the connection and a node controlling the connection.

5. Method according to any preceding claim, wherein the further node replies to the queuing indication with a connection progress notification.

6. Method according to claim 5, wherein the connection progress notification initiates the sending of a tone to the party requesting the priority connection.

7. Method according to any preceding claim, wherein the further node (2) sends a first request to set up the connection and the indication of the connection priority and the queuing indication to a third node (4) processing the connection, the third node (4) rejects the queuing indication as unsupported to the further node (2), and the further node (2) waits for a confirmation of a bearer establishment for said connection and sends a further request to set up the connection and a further indication of the connection priority to the third node (4), if a release message is received from the third node (4) for said connection.

8. Method according to any preceding claim, wherein an infinite expiry time is specified for a priority connection and wherein the selection of the first or the further timer is a decision that no timer or a reduced number of timers is attributed to a priority connection for releasing the resources.

9. Communication network adapted to perform a method according to any preceding claim.

10. Node for processing connections in a telecommunication network with a plurality of nodes, wherein the node (1, 2) comprises resources which can be attributed for processing the connection and at least one timer for supervising the connection establishment, an expiry of the timer releasing the resources attributed to the connection, and interfaces to receive a request to set up a priority connection and to send messages to further nodes (1 - 4), **characterized in that**
the node (1, 2) is adapted to select the at least one timer according to an expiry value specified for priority connections,
the node (1, 2) is adapted to send an indication of the connection priority and a queuing indication for the timer selection to a further node (1 - 4) processing the connection.

11. Program unit adapted for execution in a node for processing connections in a telecommunication network with a plurality of nodes (1 - 4), and comprising code for attributing resources to the connection for processing the connection and at least one timer for supervising the connection establishment, an expiry of the timer releasing the resources attributed to the connection, **characterized in that**
the program unit is adapted to select the at least one timer according to an expiry value specified for priority connections,
the program unit is adapted to send an indication of the connection priority and a queuing indication for the timer selection to a further node processing the connection.

12. Program unit according to claim 11 wherein the program unit is stored on a storage medium.

## Patentansprüche

1. Verfahren zum Herstellen einer Vorrangverbindung in einem Telekommunikationsnetz mit einer Mehrzahl von Knoten (1 - 4) zum Verarbeiten der Verbindung, wobei die Knoten (1 - 4) Ressourcen umfassen, die zur Verarbeitung der Verbindung zugeordnet werden können, und einen Zeitgeber zum Überwachen der Verbindungsherstellung, wobei ein Ablauf des Zeitgebers die der Verbindung zugeordneten Ressourcen freigibt, wobei ein erster der Knoten (1 - 4) eine Anforderung für den Aufbau einer Vorrangverbindung empfängt, **dadurch gekennzeichnet, dass**
der erste Knoten (1) einen ersten der Zeitgeber gemäß eines für Vorrangverbindungen festgesetzten Ablaufwertes auswählt,
der erste Knoten (1) eine Anzeige des Verbindungsvorranges und eine Warteanzeige für die Zeitgeberauswahl an einen weiteren Knoten (2), der die Verbindung verarbeitet, sendet,
der weitere Knoten (2) überprüft, ob eine Anzeige eines Verbindungsvorranges und eine Warteanzeige empfangen wird und gemäß dem Ergebnis der Überprüfung einen weiteren der Zeitgeber gemäß eines für Vorrangverbindungen festgesetzten Ablaufwertes auswählt.

2. Verfahren nach Anspruch 1, wobei die Anforderung die Anfangsnachricht zum Aufbau einer Verbindung ist und die Anfangsnachricht ein Datenfeld umfasst, das eine Prioritätsklasse für die Verbindung anzeigt.

3. Verfahren nach Anspruch 1 oder 2, wobei die Mehrzahl von Knoten (1 - 4) Steuerungsknoten umfasst, die die Verbindung und Trägerknoten (3) steuern, die zur Herstellung eines Trägers für die Verbindung ausgestaltet sind.

4. Verfahren nach Anspruch 3, wobei die Warteanzeige in einer Gruppe enthalten ist, die eine erste Warteanzeige für Nachrichten zwischen Knoten, die die Verbindung steuern, eine zweite Warteanzeige (5) für Meldungen zwischen Knoten, die die Verbindung bearbeiten und eine dritte Warteanzeige (6) für eine Meldung zwischen einem Knoten, der die Verbindung bearbeitet, und einem Knoten, der die Verbindung steuert, umfasst.

5. Verfahren nach einem der vorstehenden Ansprüche, wobei der weitere Knoten auf die Warteanzeige mit einer Verbindungsfortschrittsmeldung antwortet.

6. Verfahren nach Anspruch 5, wobei die Verbindungsfortschrittsmeldung das Senden eines Tones an den Teilnehmer, der die Vorrangverbindung anfordert, initiiert.

7. Verfahren nach einem der vorstehenden Ansprüche, wobei der weitere Knoten (2) eine erste Anforderung für den Aufbau der Verbindung und die Anzeige des Verbindungsvorranges und die Warteanzeige an einen dritten Knoten (4) sendet, der die Verbindung verarbeitet, wobei der dritte Knoten (4) die Warteanzeige gegenüber dem weiteren Knoten (2) als nicht unterstützt abweist, und der weitere Knoten (2) auf eine Bestätigung einer Trägerherstellung für die Verbindung wartet und eine weitere Anforderung für die Herstellung der Verbindung und eine weitere Anzeige des Verbindungsvorranges an den dritten Knoten (4) sendet, wenn eine Freigabemeldung von dem dritten Knoten (4) für die Verbindung empfangen wird.

8. Verfahren nach einem der vorstehenden Ansprüche, wobei eine unbegrenzte Ablaufzeit für eine Vorrangverbindung festgesetzt wird und wobei die Auswahl des ersten oder des weiteren Zeitgebers eine Entscheidung ist, dass kein Zeitgeber oder eine verringerte Anzahl von Zeitgebern einer Vorrangverbindung für das Freigeben der Ressourcen zugeordnet ist.

9. Kommunikationsnetz, ausgestaltet zur Durchführung eines Verfahrens nach einem der vorstehenden Ansprüche.

10. Knoten zum Verarbeiten von Verbindungen in einem Telekommunikationsnetz mit einer Mehrzahl von Knoten, wobei der Knoten (1 - 2) Ressourcen umfasst, die zur Verarbeitung der Verbindung zugeordnet werden können, und mindestens einen Zeitgeber zum Überwachen der Verbindungsherstellung, wobei ein Ablauf des Zeitgebers die der Verbindung zugeordneten Ressourcen freigibt, und Schnittstellen, um eine Anforderung für den Aufbau einer Vorrangverbindung zu empfangen und Meldungen an weitere Knoten (1 - 4) zu senden, **dadurch gekennzeichnet, dass**
der Knoten (1, 2) zur Auswahl des mindestens einen Zeitgebers gemäß eines für Vorrangverbindungen festgesetzten Ablaufwertes ausgestaltet ist,
der Knoten (1, 2) für das Senden einer Anzeige des Verbindungsvorranges und einer Warteanzeige für die Zeitgeberauswahl an einen weiteren Knoten (1 - 4), der die Verbindung verarbeitet, ausgestaltet ist.

11. Programmeinheit, ausgestaltet für die Ausführung in einem Knoten für die Verarbeitung von Verbindungen in einem Telekommunikationsnetz mit einer Mehrzahl von Knoten (1 - 4) und umfassend einen Code zum Zuordnen von Ressourcen zu der Verbindung zum Verarbeiten der Verbindung und mindestens einen Zeitgeber zum Überwachen der Verbindungsherstellung, wobei ein Ablauf des Zeitgebers die der Verbindung zugeordneten Ressourcen freigibt, **dadurch gekennzeichnet, dass**
die Programmeinheit zur Auswahl des mindestens einen Zeitgebers gemäß eines für Vorrangverbindungen festgesetzten Ablaufwertes ausgestaltet ist,
die Programmeinheit für das Senden einer Anzeige des Verbindungsvorranges und einer Warteanzeige für die Zeitgeberauswahl an einen weiteren Knoten, der die Verbindung verarbeitet, ausgestaltet ist.

12. Programmeinheit nach Anspruch 11, wobei die Programmeinheit auf einem Speichermedium gespeichert ist.

## Revendications

1. Procédé pour établir une connexion prioritaire dans un réseau de télécommunications comportant une pluralité de noeuds (1-4) pour traiter la connexion, dans lequel les noeuds (1-4) comprennent des ressources qui peuvent être attribuées pour le traitement de la connexion et un temporisateur pour superviser l'établissement de la connexion, une expiration du temporisateur libérant les ressources attribuées à la connexion, dans lequel un premier desdits noeuds (1-4) reçoit une demande afin d'établir une connexion prioritaire, **caractérisé en ce que**
le premier noeud (1) sélectionne un premier desdits temporisateurs en fonction d'une valeur d'expiration spécifiée pour les connexions prioritaires,
le premier noeud (1) envoie une indication de la priorité de connexion et une indication de mise en file d'attente pour la sélection du temporisateur à un autre noeud (2) traitant la connexion,
et l'autre noeud (2) vérifie si une indication d'une priorité de connexion et une indication d'une mise en file d'attente est reçue et sélectionne, en fonction du résultat de la vérification, un autre desdits temporisateurs en fonction d'une valeur d'expiration spécifiée pour les connexions prioritaires.

2. Procédé selon la revendication 1, dans lequel la demande est le message initial pour établir une connexion et ledit message initial comprend un champ de données indiquant une classe de priorité pour la connexion.

3. Procédé selon la revendication 1 ou 2, dans lequel ladite pluralité de noeuds (1-4) comprend des noeuds de commande commandant la connexion et des noeuds de support (3) adaptés pour établir un support pour la connexion.

4. Procédé selon la revendication 3, dans lequel l'indication de mise en file d'attente est contenue dans un groupe comprenant une première indication de mise en file d'attente pour les messages entre les noeuds commandant la connexion, une deuxième indication de mise en file d'attente (5) pour les messages entre les noeuds traitant la connexion et une troisième indication de mise en file d'attente (6) pour un message entre un noeud traitant la connexion et un noeud commandant la connexion.

5. Procédé selon l'une quelconque des revendications précédentes, dans lequel l'autre noeud répond à l'indication de mise en file d'attente par une notification de progression de la connexion.

6. Procédé selon la revendication 5, dans lequel la notification de progression de la connexion initie l'envoi d'une tonalité à la partie demandant la connexion prioritaire.

7. Procédé selon l'une quelconque des revendications précédentes, dans lequel l'autre noeud (2) envoie une première demande afin d'établir la connexion et l'indication de la priorité de connexion et l'indication de mise en file d'attente à un troisième noeud (4) traitant la connexion, le troisième noeud (4) rejette l'indication de mise en file d'attente comme étant non-supportée à l'autre noeud (2) et l'autre noeud (2) attend une confirmation d'un établissement de support pour ladite connexion et envoie une demande supplémentaire afin d'établir la connexion et une indication supplémentaire de la priorité de connexion au troisième noeud (4), si un message de libération est reçu d'un troisième noeud (4) pour ladite connexion.

8. Procédé selon l'une quelconque des revendications précédentes, dans lequel un temps d'expiration infini est spécifié pour une connexion prioritaire et dans lequel la sélection du premier ou de l'autre temporisateur est une décision qu'aucun temporisateur ou un nombre réduit de temporisateurs est attribué à une connexion prioritaire afin de libérer les ressources.

9. Réseau de communication adapté afin d'appliquer un procédé selon l'une quelconque des revendications précédentes.

10. Noeud pour traiter les connexions dans un réseau de télécommunications comportant une pluralité de noeuds, dans lequel le noeud (1,2) comprend des ressources qui peuvent être attribuées pour le traitement de la connexion et au moins un temporisateur pour superviser l'établissement de la connexion, une expiration du temporisateur libérant les ressources attribuées à la connexion et des interfaces pour recevoir une demande d'établissement d'une connexion prioritaire et pour envoyer des messages à d'autres noeuds (1-4), **caractérisé en ce que**
le noeud (1,2) est adapté pour sélectionner au moins un temporisateur en fonction d'une valeur d'expiration spécifiée pour les connexions prioritaires,
le noeud (1,2) est adapté pour envoyer une indication de la priorité de connexion et une indication de mise en file d'attente pour la sélection du temporisateur à un autre noeud (1-4) traitant la connexion.

11. Unité de programmes adaptée pour être exécutée dans un noeud de traitement de connexions dans un réseau de télécommunications comportant une pluralité de noeuds (1-4) et comprenant du code pour attribuer des ressources à la connexion afin de traiter la connexion et au moins un temporisateur pour superviser l'établissement de la connexion, une expiration du temporisateur libérant les ressources attribuées à la connexion, **caractérisée en ce que**
l'unité de programmes est adaptée afin de sélectionner au moins un temporisateur en fonction d'une valeur d'expiration spécifiée pour les connexions prioritaires,
l'unité de programmes est adaptée afin d'envoyer une indication de connexion prioritaire et une indication de mise en file d'attente pour la sélection du temporisateur à un autre noeud traitant la connexion.

12. Unité de programmes selon la revendication 11, dans lequel l'unité de programmes est stockée sur un support de stockage.
